# EUROPEAN PATENT SPECIFICATION

(11) **EP 2 471 687 B1**
(45) Date of publication and mention of the grant of the patent: **02.10.2019**
(21) Application number: 11196124.9
(22) Date of filing: 29.12.2011
(51) Int. Cl.: B60Q 1/00, F21S 41/50, F21S 43/50

(54) **LIGHTING DEVICE FOR VEHICLES**
BELEUCHTUNGSVORRICHTUNG FÜR FAHRZEUGE
DISPOSITIF D'ÉCLAIRAGE POUR VÉHICULES

(30) Priority: 29.12.2010 IT TO20101078
(43) Date of publication of application: 04.07.2012
(73) Proprietor: Automotive Lighting Italia S.p.A., 10078 Venaria Reale (Torino) (IT)
(72) Inventor: Toso, Roberto, 10040 Druento (IT); Vagliera, Cristiano, 10093 Collegno (IT); D'Alessandro, Domenico, 10122 Torino (IT)
(74) Representative: Bergadano, Mirko

(56) References cited:
- EP-A1- 1 985 913
- DE-A1- 10 104 118
- DE-A1- 10 337 187
- GB-A- 2 247 311
- US-A- 5 915 831
- US-A- 6 059 436

## Description

The present invention relates to a lighting device for vehicles, such as a headlight or a rearlight, on which there can be imparted different photometric characteristics and/or a different styling always using one and the same light source and modifying only a secondary low-cost component of the lighting device.

Lights for motor vehicles like e.g. those show in US-A-5915831 generally comprise a plurality of light sources set alongside one another and supported by a single body having a complex shape possibly provided at the front with a see-through protective lens, through which part of the body and the light sources are fully visible.

According to the model of vehicle, it is necessary to mount on said body light sources having different photometric characteristics and/or different characteristics of shape (in particular of perimetral profile), and/or provide bodies perhaps of a similar shape, but having the seats for housing the light sources differently spaced apart. This happens both as a consequence of the design requirements and because, for example, international rules require that the direction indicator should ensure an increasingly higher photometric performance the closer it is to the dipped-beam headlight or to the foglamps.

Consequently, at present, there is a low level of standardisation in the production of headlights and rearlights and, in particular, in the production of front optical units incorporating in general the dipped-beam headlight, the full-beam headlight, and one or more indicators, for example, the direction indicator. This increases the production costs and renders the operations of assembly more complex and burdensome.

The solution provided in EP0993987 on the one hand does not solve the problem of adapting the photometric performance of the various optical components to the specific requirements without multiplying excessively the number of optical components to be used, and on the other hand is not suitable for those cases in which the optical unit envisages a single self-supporting body that integrates part of the components of the light sources, such as, for example, the reflectors, alongside seats designed to house complete and independent optical components, such as, for example, dipped-beam headlights of any type, comprising an element for generating the light beam (a lamp, possibly halogen, or else some other equivalent element, also of a LED type), a reflector (if this function is not already incorporated in the lamp) and a lens having optical functions.

DE 101 04 118 A1 discloses a known lighting device for vehicles.

Consequently, an aim of the present invention is to overcome the aforesaid drawback by providing a lighting device for vehicles, a light, whether headlight or rearlight or complete optical unit, in which one and the same light source can be used for obtaining beams having different photometric characteristics (above all of conformation) and/or providing the light source itself with a different styling.

A further aim of the invention is the possibility of respecting more easily the mutual distances of installation on vehicles of the lighting and light-signalling devices required by international rules.

The invention hence regards a lighting device for vehicles, as defined in Claim 1.

In particular, the lighting device according to the invention comprises at least one first light source defining a first optical axis along which the light source is designed to orient a light beam, a support for the light source, and a shield set in front of the light source, substantially in the proximity thereof and designed to intercept part of the light beam; and at least one second light source defining a second optical axis parallel to the first; wherein the shield is constituted by a mask apt to hide, in a plane perpendicular to the first optical axis, the projection in said plane of at least part of at least an edge of the light source and accordingly intercepting only a peripheral part of the light beam, situated radially externally with respect to the first optical axis, the mask having a pre-set extension in a circumferential direction with respect to the first optical axis selected such as not to intersect the first optical axis in any event; wherein: i) - the mask is apt to intercept only a peripheral part of the light beam, situated laterally with respect to the first optical axis; ii) - said mask is arranged and shaped to intercept at least or only a part immediately adjacent to the second light source of the light beam emitted by the first light source; iii) - said mask is set radially between the first optical axis and the at least one second light source determining an overall optical effect equivalent to what would be obtained, in the absence of said mask, by setting at a greater distance apart the first light source from the second light source.

According to the main aspect of the invention: iv) - said first light source comprises an element for generating the light beam, optionally a possible reflector set behind the element for generating the light beam and a lens set in front of the element for generating the light beam; said mask being mounted on the support substantially in contact with the lens, on the side opposite to the element for generating the light beam, and covering at least part of an edge of said lens, radially external with respect to the optical axis; v) - said lighting device consists of a front optical unit, wherein the first light source is constituted by a dipped-beam headlight and the second light source is constituted by a direction indicator set alongside the dipped-beam headlight and further comprising a third light source constituted by a full-beam headlight set alongside the dipped-beam headlight, on the opposite side with respect to the direction indicator; vi) - said mask being constituted by a ring mounted around the dipped-beam headlight, substantially sharing the first optical axis and provided radially, in cantilever fashion towards the first optical axis, with a first fin and a second fin, which each have a pre-set circumferential and radial extension and are set between the first optical axis and, respectively, said second and third light sources.

The invention hence represents an altogether innovative use for purposes that are completely different from those for which it was used in the past, of a dimmer shield, such as, for example, the one illustrated in EP1855050; consequently, it has been necessary to provide the shield of the present invention with a completely different conformation.

In particular, the mask is defined by an annular element, which delimits the first light source peripherally and defines inside it a through opening having a pre-set perimetral profile, possibly asymmetrical, which lets through only the portion of the light beam generated by the first light source closest to the first optical axis so as to impart on said light beam a desired conformation by concealing a peripherally external part thereof.

In addition, the mask is made of a synthetic plastic material according to a pre-set profile and/or coloured with one or more desired colours and/or metallized in order to impart on the first light source an aesthetic appearance that is each time different.

In this way, for example, the invention enables, where desired, use of direction indicators with lower performance, simply by shielding a reduced portion of the light beam emitted by the dipped-beam headlight immediately adjacent to the direction indicator itself, hence only with a slight reduction in the performance of the dipped-beam headlight and without any consequence on the limits of photometric performance imposed by the relevant standards. Thus a higher standardization of the components is obtained, along with a considerable economic saving.

Likewise, one and the same dipped-beam headlight can be used, for example of a circular shape and of pre-set power, by modifying the aesthetic shape of the profile thereof visible from outside the front optical unit, through the see-through protective lens, and/or the photometric performance, in particular the conformation of the beam emitted, without requiring modifications to the body of the optical unit and/or of the reflector or of the lens of the dipped-beam headlight.

Further characteristics and advantages of the invention will emerge clearly from the ensuing description, provided purely by way of altogether non-limiting example, of different examples of embodiment thereof, with reference to the figures of the annexed plates of drawings, wherein:
- Figure 1 illustrates as a whole a front elevation of a simple lighting device;
- Figure 2 illustrates at a reduced scale a perspective view three quarters from the front and from above, of a complex lighting device made according to the invention, in the case in point incorporating the device of Figure 1;
- Figure 3A is an exploded perspective view of the lighting device of Figure 1;
- Figure 3B is an exploded perspective view of a variant of the lighting device of Figure 1; and

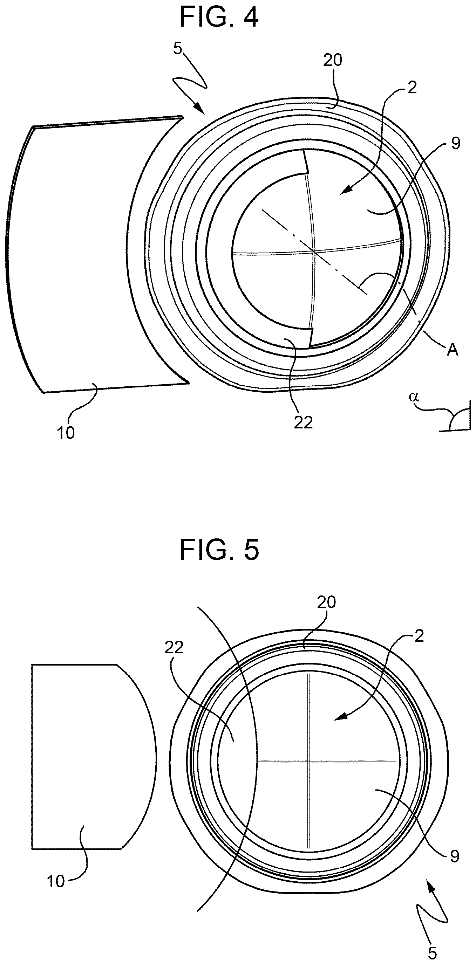

- Figures 4 and 5 are, respectively, a schematic perspective view and a schematic front elevation of two examples of embodiment of the lighting device according to the invention, in particular referred to the complex device of Figure 2.

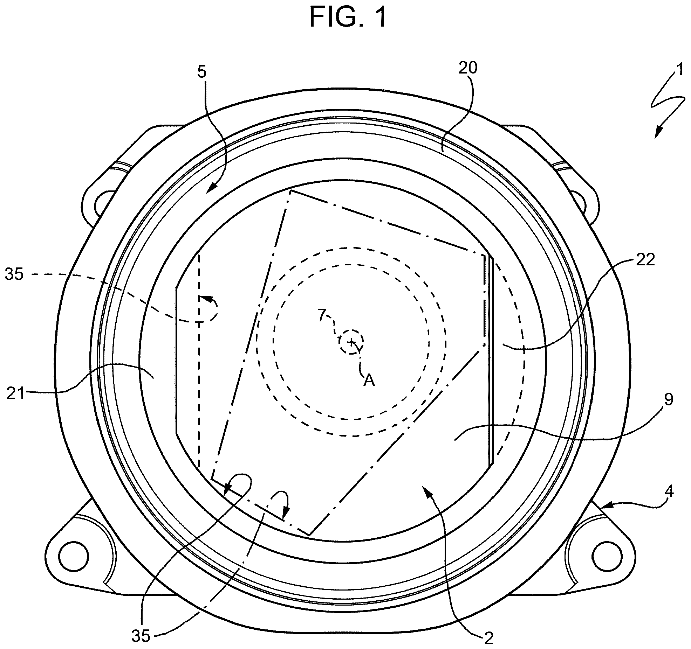

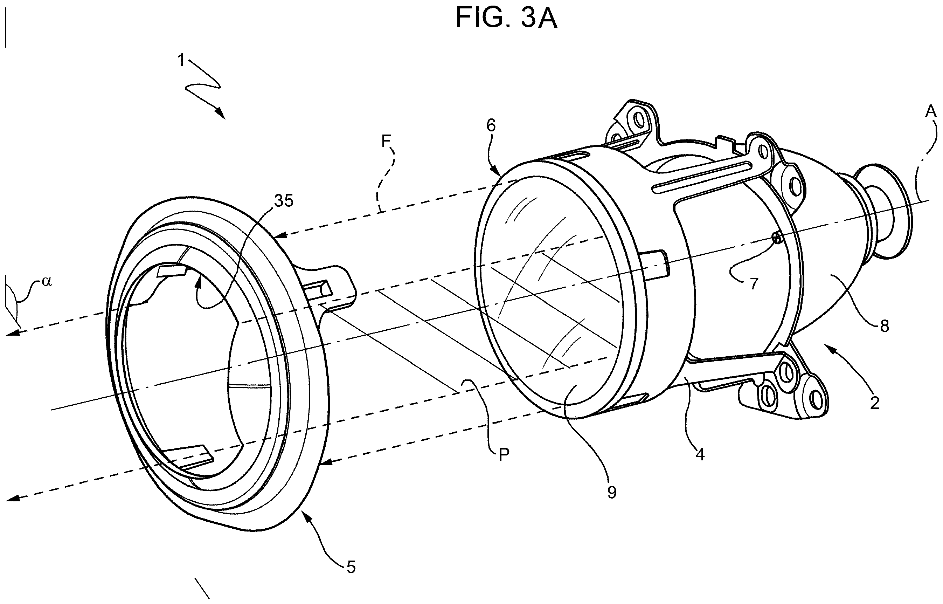

With reference to Figures 1 and 3A, designated as a whole by 1 is a lighting device for vehicles, such as a light, headlight or rearlight, comprising at least one first light source 2 defining a first optical axis A along which the light source 2 is designed to orient a light beam F (Figure 3A), a support 4 for the light source 2, and a shield 5 set in front of the light source 2, substantially in the proximity thereof but not forming part thereof, and designed to intercept part of the light beam F.

According to the invention, however, the shield 5 is not constituted by a dimmer cap, as in certain dipped-beam headlights of the past, designed to intercept the central part (closest to the optical axis A and/or aligned along said axis) of the beam F, but is, instead, constituted by a mask, preferably of an annular or semi-annular shape, shaped so as to hide, in a plane α perpendicular to the optical axis A (Figure 3A), the projection in said plane of at least part of at least one peripherally external edge, designated as a whole by 6, of the light source 2, in such a way that the mask 5 is designed to intercept only a peripheral part P (hatched in Figure 3A) of the light beam F, set radially externally and laterally with respect to the optical axis A, having a pre-set extension, hence any desired extension imposed in the design stage, in a circumferential direction with respect to the optical axis A, and such as not to intercept the optical axis A in any case.

The light source 2 is constituted by a dipped-beam headlight and comprises an element 7 for generating the light beam F, for example, a lamp or some other lighting element (discharge lamp, LED, etc.), optionally a possible reflector 8 (not necessary if its function is already integrated in the element 7, but present in the non-limiting example illustrated) set behind the element 7 for generating the light beam F and, a lens 9 set in front of the element 7 for generating the light beam F. In the case where a reflector is present, the optical axis of the headlight passes obviously through the focus of the reflector; in the case illustrated, the optical axis A hence passes through the focus of the reflector 8.

Hence, according to the invention, the mask 5 is mounted on the support 4 so as to be substantially in contact with the lens 9, on the opposite side with respect to the element 7 for generating the light beam F and hence externally with respect to the light source 2, i.e., the ensemble formed by the reflector 8 and the lens 9, and so as to cover at least part of an edge of the lens 9, radially external with respect to the optical axis A, defining in the case in point the edge 6 of peripheral delimitation of the light source 2 considered as a whole.

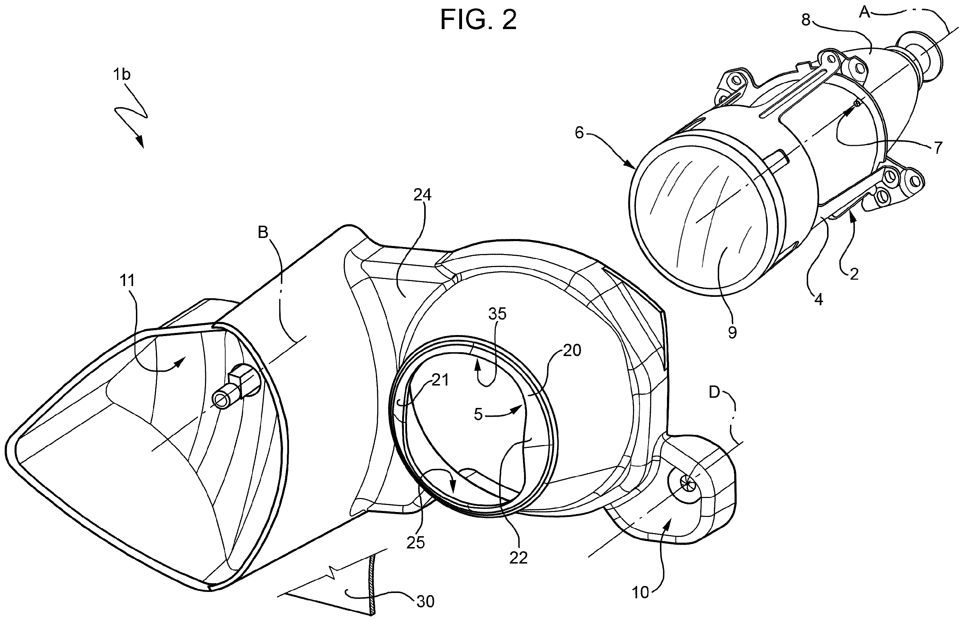

With reference now to Figure 2, the lighting device according to the invention, instead of being constituted by a single light or light source, such as the dipped-beam headlight 2, plus the mask 5, can be constituted by an assembly 1b comprising at least one second light source 10 defining a second optical axis D parallel to the axis A. In this case, the mask 5 is shaped and arranged so as to intercept, for example, only or at least that part of the light beam F situated immediately adjacent to the second light source 10, in any case in such a way as to determine an overall optical effect equivalent to the one that would be obtained, in the absence of the mask 5, by setting at a greater distance apart the first light source 2 from the second light source 10, in the case in point acting in a direction transverse to the optical axes A and D.

In Figure 2, the lighting device 1b is constituted by a vehicle front optical unit, wherein the first light source is constituted by the dipped-beam headlight 2 and wherein the second light source 10 is constituted by a (known) direction indicator set alongside the dipped-beam headlight 2. The optical unit 1b further comprises a third light source 11 constituted by a full-beam headlight having an optical axis B substantially parallel to the axes A and D and set alongside the dipped-beam headlight 2, on the opposite side with respect to the direction indicator 10.

In this case, the mask 5 is constituted by a ring 20 mounted around the dipped-beam headlight 2, substantially sharing the first optical axis A and provided radially, in cantilever fashion towards the first optical axis A, with a first fin 22 and a second fin 21, which each have a pre-set circumferential and radial extension and are set between the first optical axis A and, respectively, the light sources 10 and 11 but, in any case, without ever intercepting the optical axis A and/or consequently covering the focus of the reflector 8.

The mask 5, i.e., the ring 20, can be carried by/or fixed with respect to the support 4, which in the case in point supports both the lens 9 and the reflector 8 and also has the function of constraining the dipped-beam headlight 2 in a known way to a body 24 of the optical unit 1b, and is made of a single piece with the support 4 or else, preferably, as an independent annular or semi-annular element (for example, in so far as the ring 20 is open for a circumferential stretch) mounted in a removable way on the support 4, for example, by means of screws (not illustrated) or else by snap action. The body 24 defines, in this case, the overall support of the light source 2, as likewise the other light sources 10 and 11.

Alternatively, in particular in the case of the optical unit 1b, the mask 5, shaped like a ring 20, is fixedly carried by the body 24, which is known, of the front optical unit 1b, around a seat 25 (Figure 2) for the dipped-beam headlight 2 designed in particular to receive the lens 9 of the latter, behind the mask 5. In this case, the mask 5 can be made of a single piece with the body 24, which is obtained, as is preferably the mask 5, by moulding a synthetic plastic meterial, or else as an independent annular or semi-annular element (in the sense specified above) 20 mounted in a removable way on the body 24, for example, by snap-action on a perimetral annular edge of the seat 25, delimiting it at the front. The optical unit 1b is completed, in a known way, by a see-through lens 30, which is carried by the body 24 for protection of the light sources 2, 10, and 11.

Consequently, according to the preferred embodiment of the invention, the mask 5 is defined by an annular element or ring 20 that delimits peripherally the first light source 2 and that defines inside it a through opening 35 (Figure 1) having any pre-set perimetral profile, possibly asymmetrical, which lets through only and all the portion of the light beam F generated by the first light source 2 closest to the first optical axis A (i.e., the central portion of the beam F) so as to impart on the light beam F a desired conformation for concealing only all or part of the peripherally external fraction of the beam F itself, which is intercepted by the fins 21 and 22. Indicated dashed and dashed and dotted in Figure 1 are possible alternative shapes of the through opening 35. Clearly, any shape imposed in the design stage can be obtained. In any case, the entire peripheral edge of the opening 35 remains always, according to the invention, at a pre-set radial distance that is relatively large (with reference to the transverse dimensions of the light source to be shielded) from the optical axis A and from the corresponding focus of the reflector 8.

As has already been said, the mask 5 is made of a synthetic plastic material according to a pre-set profile and can be coloured with one or more desired colours and/or metallized in order to impart on the first light source 2 an aesthetic appearance that is each time different.

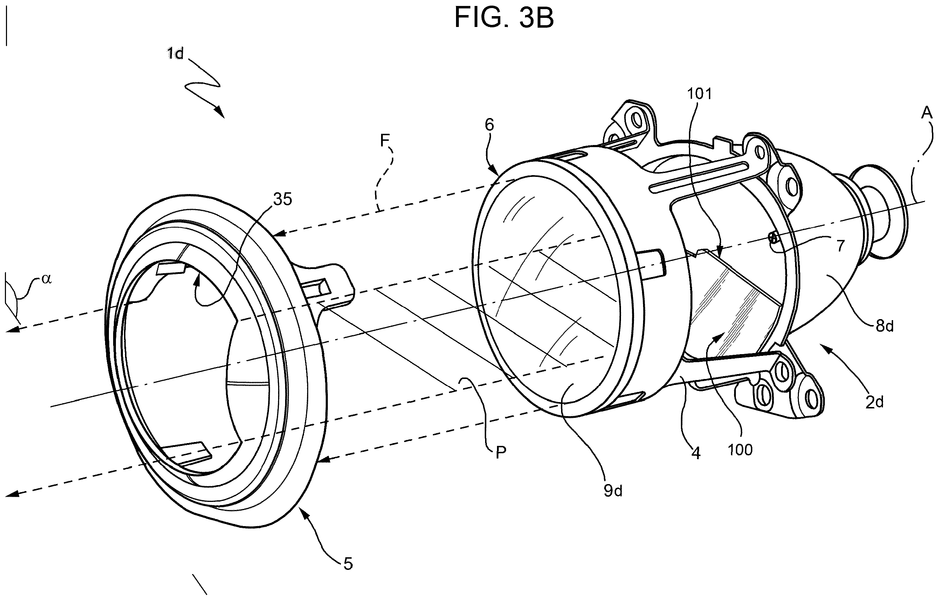

With reference now to Figure 3B, where the items that are similar to or the same as those already described are designated for simplicity by the same reference numbers, designated as a whole by 1d is a lighting device for vehicles that is substantially similar to the lighting device 1 of Figures 1 and 3A, from which it differs in that it comprises, in addition to the mask 5 and to the support 4, a light source 2d, which substitutes the light source 2 described previously. In the example illustrated, the light source 2d is constituted by a dipped-beam headlight of an elliptical type comprising an element 7 for generating the light beam F, for example a lamp or some other lighting element (discharge lamp, LED, etc.), an elliptical reflector 8d set behind the element 7 for generating the light beam F and having its focus set on the optical axis A, substantially in a position corresponding to the lighting element 7, a convergent lens 9d set in front of the element 7 for generating the light beam F, and a dimmer shield 100 set between the lens 9d and the reflector 8d and shaped so as to intercept the optical axis A (and consequently cover at least in part the focus of the reflector 8d) for blocking at least a part of the more central portion of the light beam F emitted by the element 7 and reflected by the reflector 8d, imparting thereon a boundary or "cut-off" line between light and dark defined by a top edge 101 of the shield 100. Hence, it is clear that the shield 100 has a function completely different from that of the mask 5, which, instead, is designed to intercept and suppress only peripheral parts of the beam F in order to increase artificially, but to all practical purposes, the lateral distance between the light 2d and possible other lighting devices present on the vehicle in a position adjacent to the light 2d. The latter is preferably mounted directly fixed with respect to the vehicle, in a known way, thanks to the support 4, instead of forming part of a complex optical unit, such as the unit 1b. The mask 5 is hence arranged in front of the lens 9d, on the opposite side with respect to the dimmer shield 100 and externally with respect to the light 2d.

## Claims

1. A lighting device (1b) for vehicles comprising: at least one first light source (2) defining a first optical axis (A) along which the light source orients a light beam (F), a support (4) for the light source (2), and a shield set in front of the light source, substantially in the proximity thereof to intercept part of the light beam; and at least one second light source (10) defining a second optical axis (D) parallel to the first; wherein the shield is constituted by a mask (5; 20) apt to hide, in a plane (α) perpendicular to the first optical axis, the projection in said plane of at least part of at least an edge (6) of the light source and accordingly intercepting only a peripheral part (P) of the light beam (F), situated radially externally with respect to the first optical axis (A), the mask (5,20) having a pre-set extension in a circumferential direction with respect to the first optical axis selected such as not to intersect the first optical axis in any event; wherein:
i)- the mask (5; 20) is apt to intercept only a peripheral part (P) of the light beam (F), situated laterally with respect to the first optical axis (A);
ii)- said mask (5; 20) is arranged and shaped to intercept at least or only a part immediately adjacent to the second light source of the light beam (F) emitted by the first light source,
iii)- said mask (5; 20) is set radially between the first optical axis (A) and the at least one second light source (10)determining an overall optical effect equivalent to what would be obtained, in the absence of said mask, by setting at a greater distance apart the first light source (2) from the second light source (10); **characterized in that**
iv)- said first light source (2) comprises an element (7) for generating the light beam, optionally a possible reflector (8) set behind the element (7) for generating the light beam and a lens (9) set in front of the element for generating the light beam; said mask (5; 20) being mounted on the support (4) substantially in contact with the lens (9), on the side opposite to the element for generating the light beam, and covering at least part of an edge (6) of said lens, radially external with respect to the optical axis;
v)- said lighting device consists of a front optical unit (1b), wherein the first light source is constituted by a dipped-beam headlight (2) and the second light source is constituted by a direction indicator (10) set alongside the dipped-beam headlight and further comprising a third light source constituted by a full-beam headlight (11) set alongside the dipped-beam headlight, on the opposite side with respect to the direction indicator;
vi)- said mask being constituted by a ring (20) mounted around the dipped-beam headlight (2), substantially sharing the first optical axis (A) and provided radially, in cantilever fashion towards the first optical axis, with a first fin (21) and a second fin (22), which each have a pre-set circumferential and radial extension and are set between the first optical axis (A) and, respectively, said second and third light sources (10, 11).

2. The lighting device according to Claim 1, **characterized in that** said ring (20) has an annular or semi-annular shape.

3. The lighting device according to Claim 1, **characterized in that** said mask (5; 20) is fixedly carried by a support (4) of a lens (9) of the dipped-beam headlight (2) and is made of a single piece therewith or else as an independent annular or semi-annular element (20), mounted in a removable way on the support.

4. The lighting device according to Claim 1, **characterized in that** said mask (5; 20) is fixedly carried by a body (24) of the front optical unit, around and in front of a seat (25) for the dipped-beam headlight apt in particular to receive a lens (9) of the latter; said mask (5; 20) being made of a single piece with the body (24), or else as an independent annular or semi-annular element (20), mounted in a removable way on the body (24), for example by snap action on an annular edge of said seat (25).

5. The lighting device according to any one of the preceding claims, **characterized in that** said mask is defined by an annular element (20) that delimits the first light source (2) peripherally and that defines inside it a through opening (35) having a pre-set perimetral profile, possibly asymmetrical, which lets through only and all the portion of the light beam (F) generated by the first light source closest to the first optical axis (A) imparting on said light beam (F) a desired conformation for concealing only an external peripheral part thereof.

6. The lighting device according to any one of the preceding claims, **characterized in that** said mask (5; 20) is made of a synthetic plastic material according to a pre-set profile and/or coloured with one or more desired colours and/or metallized in order to impart on the first light source (2) a different aesthetic appearance.

7. The lighting device according to Claim 1, **characterized in that** said first light source is constituted by a dipped-beam headlight of an elliptical type (2d) comprising an element (7) for generating the light beam (F), an elliptical reflector (8d) set behind the element (7) for generating the light beam (F) and having its focus set on the optical axis (A), substantially in a position corresponding to the element (7) for generating the beam, a converging lens (9d) set in front of the element (7) for generating of the beam, and a dimmer shield (100) set between the lens (9d) and the reflector (8d) and shaped to intercept the optical axis (A) and, consequently, to cover at least in part the focus of said reflector (8d) for blocking at least a part the more central portion of the light beam (F), imparting thereon a boundary or "cut-off" line between light and dark defined by a top edge (101) of the dimmer shield (100); said mask (5) being set in front of said lens (9d), on the opposite side with respect to the dimmer shield (100), outside the headlight (2d) .

## Patentansprüche

1. Beleuchtungsvorrichtung (1b) für Fahrzeuge, umfassend:
wenigstens eine erste Lichtquelle (2), die eine erste optische Achse (A) definiert, entlang der die Lichtquelle einen Lichtstrahl (F) ausrichtet, einen Halter (4) für die Lichtquelle (2), und eine Abschirmung, die vor der Lichtquelle im Wesentlichen in deren Nähe derselben angeordnet ist, um einen Teil des Lichtstrahls abzufangen;
und wenigstens eine zweite Lichtquelle (10), die eine zweite optische Achse (D) parallel zu der ersten definiert; wobei die Abschirmung von einer Maske (5; 20) gebildet wird, die dazu geeignet ist, in einer Ebene (α) senkrecht zu der ersten optischen Achse die Projektion wenigstens eines Teils von wenigstens einer Kante (6) der Lichtquelle in der Ebene zu verbergen und dementsprechend nur einen Umfangsteil (P) des Lichtstrahls (F) abzufangen, der in Bezug auf die erste optische Achse (A) radial außen angeordnet ist, wobei die Maske (5, 20) eine voreingestellte Erweiterung in einer Umfangsrichtung in Bezug auf die erste optische Achse aufweist, die so gewählt ist, dass sie die erste optische Achse keinesfalls schneidet; wobei:
i)- die Maske (5; 20) geeignet ist, nur einen Umfangsteil (P) des Lichtstrahls (F) abzufangen, der in Bezug auf die erste optische Achse (A) seitlich angeordnet ist;
ii)- die Maske (5; 20) so angeordnet und geformt ist, dass sie wenigstens oder nur einen Teil des von der ersten Lichtquelle emittierten Lichtstrahls (F) unmittelbar neben der zweiten Lichtquelle abfängt,
iii)- die Maske (5; 20) radial zwischen der ersten optischen Achse (A) und der wenigstens einen zweiten Lichtquelle (10) angeordnet ist und eine optische Gesamtwirkung bestimmt, die derjenigen entspricht, welche in Abwesenheit der Maske durch Anordnen der ersten Lichtquelle (2) in einem größeren Abstand von der zweiten Lichtquelle (10) erhalten würde;
**dadurch gekennzeichnet, dass**
iv)- die erste Lichtquelle (2) ein Element (7) zum Erzeugen des Lichtstrahls, optional einen möglichen Reflektor (8), der hinter dem Element (7) zum Erzeugen des Lichtstrahls angeordnet ist, und eine Linse (9) umfasst, die vor dem Element zum Erzeugen des Lichtstrahls angeordnet ist; wobei die Maske (5; 20) auf dem Halter (4) im Wesentlichen in Kontakt mit der Linse (9) auf der dem Element zum Erzeugen des Lichtstrahls gegenüberliegenden Seite montiert ist und wenigstens einen Teil einer Kante (6) der Linse in Bezug auf die optische Achse radial außen abdeckt;
v)- die Beleuchtungsvorrichtung eine vordere optische Einheit (1b) umfasst, wobei die erste Lichtquelle von einem Abblendscheinwerfer (2) gebildet wird und die zweite Lichtquelle von einem neben dem Abblendscheinwerfer angeordneten Richtungsanzeiger (10) gebildet wird, und ferner eine dritte Lichtquelle umfasst, die von einem Fernlichtscheinwerfer (11) gebildet wird, der neben dem Abblendscheinwerfer auf der bezüglich des Richtungsanzeigers gegenüberliegenden Seite angeordnet ist;
vi)- wobei die Maske von einem Ring (20) gebildet wird, der um den Abblendscheinwerfer (2) herum montiert ist, im Wesentlichen die erste optische Achse (A) gemein hat und radial in freitragender Weise in Richtung zu der ersten optischen Achse mit einer ersten Rippe (21) und einer zweiten Rippe (22) versehen ist, die jeweils eine vorgegebene Umfangs- und Radialausdehnung aufweisen und zwischen der ersten optischen Achse (A) und jeweils der zweiten und der dritten Lichtquelle (10, 11) angeordnet sind.

2. Beleuchtungsvorrichtung nach Anspruch 1, **dadurch gekennzeichnet, dass** der Ring (20) eine ringartige oder halbringartige Form aufweist.

3. Beleuchtungsvorrichtung nach Anspruch 1, **dadurch gekennzeichnet, dass** die Maske (5; 20) von einem Halter (4) einer Linse (9) des Abblendscheinwerfers (2) starr getragen wird und mit diesem aus einem Stück oder ansonsten als unabhängiges ringartiges oder halbringartiges Element (20), das in einer abnehmbaren Weise an dem Halter montiert ist, gefertigt ist.

4. Beleuchtungsvorrichtung nach Anspruch 1, **dadurch gekennzeichnet, dass** die Maske (5; 20) von einem Körper (24) der vorderen optischen Einheit starr um einen Sitz (25) für den Abblendscheinwerfer herum und vor demselben, der insbesondere geeignet ist, eine Linse (9) desselben aufzunehmen, getragen wird; wobei die Maske (5; 20) mit dem Körper (24) aus einem Stück oder ansonsten als unabhängiges ringartiges oder halbringartiges Element (20) gefertigt ist, das in einer abnehmbaren Weise an dem Körper (24) montiert ist, zum Beispiel mittels Schnappfunktion an eine ringförmigen Kante des Sitzes (25) .

5. Beleuchtungsvorrichtung nach einem der vorangehenden Ansprüche, **dadurch gekennzeichnet, dass** die Maske durch ein ringartiges Element (20) definiert ist, das die erste Lichtquelle (2) am Umfang begrenzt und in seinem Inneren eine Durchgangsöffnung (35) mit einem voreingestellten, möglicherweise asymmetrischen Perimetralprofil definiert, das nur denjenigen gesamten Teil des von der ersten Lichtquelle erzeugten Lichtstrahls (F) durchlässt, der der ersten optischen Achse (A) am nächsten liegt, wobei dem Lichtstrahl (F) eine gewünschte Form verliehen wird, um nur einen äußeren Umfangsteil desselben zu verbergen.

6. Beleuchtungsvorrichtung nach einem der vorangehenden Ansprüche, **dadurch gekennzeichnet, dass** die Maske (5; 20) aus einem synthetischen Kunststoffmaterial entsprechend einem vorgegebenen Profil gefertigt ist und/oder mit einer oder mehreren gewünschten Farben eingefärbt ist und/oder metallisiert ist, um der ersten Lichtquelle (2) ein anderes ästhetisches Erscheinungsbild zu verleihen.

7. Beleuchtungsvorrichtung nach Anspruch 1, **dadurch gekennzeichnet, dass** die erste Lichtquelle von einem Abblendscheinwerfer eines elliptischen Typs (2d) gebildet wird, der ein Element (7) zum Erzeugen des Lichtstrahls (F), einen elliptischen Reflektor (8d), der hinter dem Element (7) zum Erzeugen des Lichtstrahls (F) angeordnet ist und dessen Fokus auf der optischen Achse (A) im Wesentlichen in einer Position, die dem Element (7) zum Erzeugen des Lichtstrahls entspricht, angeordnet ist, eine Sammellinse (9d), die vor dem Element (7) zum Erzeugen des Strahls angeordnet ist, und einen Abblendschirm (100) umfasst, der zwischen der Linse (9d) und dem Reflektor (8d) angeordnet und so geformt ist, dass er die optische Achse (A) schneidet und folglich wenigstens teilweise den Fokus des Reflektors (8d) abdeckt, um wenigstens einen Teil des zentraleren Abschnitts des Lichtstrahls (F) zu blockieren, wodurch diesem eine Grenzlinie oder "Abschneide"-Linie zwischen Hell und Dunkel, die durch eine Oberkante (101) des Abblendschirms (100) definiert ist, verliehen wird; wobei die Maske (5) vor der Linse (9d) auf der bezüglich des Abblendschirms (100) gegenüberliegenden Seite außerhalb des Scheinwerfers (2d) angeordnet ist.

## Revendications

1. Dispositif d'éclairage (1b) pour véhicules comprenant : au moins une première source lumineuse (2) définissant un premier axe optique (A) le long duquel la source lumineuse oriente un faisceau lumineux (F), un support (4) pour la source lumineuse (2), et un écran réglé devant la source lumineuse, sensiblement à proximité de celle-ci pour intercepter une partie du faisceau lumineux ; et au moins une deuxième source lumineuse (10) définissant un deuxième axe optique (D) parallèle au premier ; dans lequel l'écran est constitué d'un masque (5 ; 20) susceptible de cacher, sur un plan (α) perpendiculaire au premier axe optique, la projection sur ledit plan d'au moins une partie d'au moins un bord (6) de la source lumineuse et interceptant par conséquent seulement une partie périphérique (P) du faisceau lumineux (F), situé radialement à l'extérieur par rapport à un premier axe optique (A), le masque (5 ; 20) ayant une extension préréglée dans une direction circonférentielle par rapport au premier axe optique choisie de sorte à ne pas couper le premier axe optique en tout état de cause ; dans lequel :
i)- le masque (5 ; 20) est susceptible d'intercepter seulement une partie périphérique (P) du faisceau lumineux (F), située latéralement par rapport au premier axe optique (A) ;
ii)- ledit masque (5 ; 20) est agencé et façonné pour intercepter au moins ou seulement une partie immédiatement adjacente à la deuxième source lumineuse du faisceau lumineux (F) émise par la première source lumineuse,
iii)- ledit masque (5 ; 20) est réglé radialement entre le premier axe optique (A) et l'au moins une deuxième source lumineuse (10) déterminant un effet optique global équivalent à ce qui aurait été obtenu, en l'absence dudit masque, en réglant à une plus grande distance l'une de l'autre la première source lumineuse (2) et la deuxième source lumineuse (10) ; **caractérisé en ce que**
iv)- ladite première source lumineuse (2) comprend un élément (7) pour générer le faisceau lumineux, facultativement un réflecteur éventuel (8) réglé derrière l'élément (7) pour générer le faisceau lumineux et une lentille (9) réglée devant l'élément pour générer le faisceau lumineux ; ledit masque (5 ; 20) étant monté sur le support (4) sensiblement en contact avec la lentille (9), sur le côté opposé à l'élément pour générer le faisceau lumineux, et couvrant au moins une partie d'un bord (6) de ladite lentille, radialement externe par rapport à l'axe optique ;
v)- ledit dispositif d'éclairage consiste en une unité optique avant (1b), dans lequel la première source lumineuse est constituée d'un feu avant de croisement (2) et la deuxième source lumineuse est constituée d'un indicateur de direction (10) réglé à côté du feu avant de croisement et comprenant en outre une troisième source lumineuse constituée d'un feu avant de route (11) réglé à côté du feu avant de croisement, sur le côté opposé par rapport à l'indicateur de direction ;
vi)- ledit masque étant constituée d'un anneau (20) monté autour du feu avant de croisement (2), partageant sensiblement le premier axe optique (A) et prévu radialement, en porte à faux vers le premier axe optique, avec une première ailette (21) et une deuxième ailette (22), dont chacune a une extension circonférentielle et radiale préréglée et qui sont réglées entre le premier axe optique (A) et, respectivement, lesdites deuxième et troisième sources lumineuses (10, 11).

2. Dispositif d'éclairage selon la revendication 1, **caractérisé en ce que** ledit anneau (20) a une forme annulaire ou semi-annulaire.

3. Dispositif d'éclairage selon la revendication 1, **caractérisé en ce que** ledit masque (5 ; 20) est porté de manière fixe par un support (4) d'une lentille (9) du feu avant de croisement (2) et est réalisé d'un seul tenant avec celui-ci ou encore comme un élément annulaire ou semi-annulaire indépendant (20), monté de façon amovible sur le support.

4. Dispositif d'éclairage selon la revendication 1, **caractérisé en ce que** ledit masque (5 ; 20) est porté de manière fixe par un corps (24) de l'unité optique avant, autour de et devant un siège (25) pour que le feu avant de croisement soit susceptible de recevoir en particulier une lentille (9) de ce dernier ; ledit masque (5 ; 20) étant réalisé d'un seul tenant avec le corps (24), ou encore comme un élément annulaire ou semi-annulaire indépendant (20), monté de façon amovible sur le corps (24), par exemple par une action rapide sur un bord annulaire dudit siège (25).

5. Dispositif d'éclairage selon l'une quelconque des revendications précédentes, **caractérisé en ce que** ledit masque est défini par un élément annulaire (20) qui délimite la première source lumineuse (2) de manière périphérique et qui définit à l'intérieur de celui-ci une ouverture traversante (35) ayant un profil périmétrique préréglé, éventuellement asymétrique, qui laisse passer seulement et toute la portion du faisceau lumineux (F) généré par la première source lumineuse la plus proche du premier axe optique (A) conférant audit faisceau lumineux (F) une conformation souhaitée pour occulter seulement une partie périphérique externe de celui-ci.

6. Dispositif d'éclairage selon l'une quelconque des revendications précédentes, **caractérisé en ce que** ledit masque (5 ; 20) est réalisé en une matière plastique synthétique selon un profil préréglé et/ou coloré avec une ou plusieurs couleur(s) souhaitée(s) et/ou métallisé afin de conférer à la première source lumineuse (2) un aspect esthétique différent.

7. Dispositif d'éclairage selon la revendication 1, **caractérisé en ce que** ladite première source lumineuse est constituée d'un feu avant de croisement de type elliptique (2d) comprenant un élément (7) pour générer le faisceau lumineux (F), d'un réflecteur elliptique (8d) réglé derrière l'élément (7) pour générer le faisceau lumineux (F) et ayant son foyer réglé sur l'axe optique (A), sensiblement dans une position correspondant à l'élément (7) pour générer le faisceau, d'une lentille convergente (9d) réglée devant l'élément (7) pour la génération du faisceau, et un écran gradateur (100) réglé entre la lentille (9d) et le réflecteur (8d) et façonné pour intercepter l'axe optique (A) et, par conséquent, pour couvrir au moins en partie le foyer dudit réflecteur (8d) pour bloquer au moins une partie de la portion la plus au centre du faisceau lumineux (F), conférant à celui-ci une ligne de coupure ou frontière entre la lumière et l'obscurité définie par un bord supérieur (101) de l'écran gradateur (100) ; ledit masque (5) étant réglé devant ladite lentille (9d), sur le côté opposé par rapport à l'écran gradateur (100), à l'extérieur du feu avant (2d).
